# EUROPEAN PATENT SPECIFICATION

(11) **EP 4 205 530 B1**
(45) Date of publication and mention of the grant of the patent: **10.12.2025**
(21) Application number: 21859432.3
(22) Date of filing: 11.08.2021
(51) Int. Cl.: A01D 69/02, A01D 41/14, A01D 45/00, A01D 34/00

(54) **SYSTEM FOR ACTUATING AND CONTROLLING AGRICULTURAL PLATFORMS**
SYSTEM ZUR BETÄTIGUNG UND STEUERUNG VON LANDWIRTSCHAFTLICHEN PLATTFORMEN
SYSTÈME D'ACTIONNEMENT ET DE COMMANDE DE PLATEFORMES AGRICOLES

(30) Priority: 25.08.2020 BR 102020017363
(43) Date of publication of application: 05.07.2023
(73) Proprietor: GTS Do Brasil Ltda., 88506-600 Bairro São Paulo (BR)
(72) Inventor: STRASSER, Assis, 88501-130 Lages, SC (BR)
(74) Representative: Clarke, Modet y Cía., S.L.
(86) International application number: PCT/BR2021/050336
(87) International publication number: WO 2022/040765

(56) References cited:
- EP-A1- 3 332 627
- CN-A- 105 050 382
- JP-A- 2009 171 851
- JP-A- 2009 171 851
- RU-U1- 106 075
- US-A1- 2018 084 721
- US-A1- 2019 104 685

## Description

### Field of the Invention:

The present invention is addressed to the field of agriculture, more precisely to the field of development and implementation of agricultural machinery for harvesting.

### Backgrounds of the invention:

**It** is common knowledge that agriculture, and its effectiveness, arouses enormous interest in the development of cultivation techniques and machinery necessary for production. Over the years, a large number of machines have been created for planting and harvesting crops in order to improve execution and increase their success.

Harvesting machines are of great importance for commercial agriculture, because, with their use, it is possible to harvest in a much faster way compared to a manual harvesting performed by rural workers. These machines essentially comprise cutting platforms and combine harvesters. Combine harvesters are tractors that have the capacity to receive the harvested crop, separate the product with economic value (for example: grains) from the disposable material (for example: straws) and store the product.

The combine harvesters have, in their front, a feed channel where the harvested material is introduced. The cutting platform is coupled to the feed channel, adapted to the type of harvested crop, which cuts and transports the crop to the combine harvester feed channel.

The combine harvester feed channel also has, on its sides, transmission shafts that are connected to cardan shafts of the agricultural platform, in which the rotational movement of the combine harvester transmission shafts is transmitted to the cardan shafts of the agricultural platform that, in turn, transmit the movement to the other elements of the agricultural platform, thus driving and duly operating the agricultural platform with the mechanical transmission coming from the combine harvester.

The mechanical transmission system of movement is commonly used on agricultural platforms. There is no electrical transmission system of the state of the art to drive agricultural platforms, mainly because agricultural machines are robust and have low added value.

Agricultural crop cutting platforms have little added value and can be considered as an extension of combine harvesters - which have onboard control and monitoring systems. The present invention aims at raising the level of control and automation of the platforms independently of the systems contained in the combine harvesters.

### State of the art:

Document EP1935226 presents a driver for the cutting system of an agricultural platform, in which one of the possibilities for the driver is to be configured with the presence of an electric motor. The document does not present a solution for the electrical driving of the other elements of the agricultural platform as the present invention, only for the platform cutting system.

Document US8931245 describes an individual electrical drive system for cutting discs that allows the individual adjustment of the speed and/or direction of rotation of each cutting disc. The document does not present a solution for the electrical driving of the other elements of the agricultural platform as the present invention, only for the platform cutting system.

Document EP3332627A1 discloses an agricultural working machine with a cutting unit and a control and regulation unit, wherein the cutting unit has electric drives for operating cutting unit working units.

There is no document in the patent literature that presents an electrical drive, control and monitoring system for cutting systems, side conveyor belts, central conveyor belt and auger of an agricultural platform, as the present invention. Each of these systems has particularity in its driving, control and monitoring.

### Brief description of the invention:

The present invention is defined by appended claim 1. Preferred aspects of the invention are defined by the appended dependent claims.

### Brief description of the figures:

To obtain a view of the object of this invention, the figures to which references are made are presented, as follows.

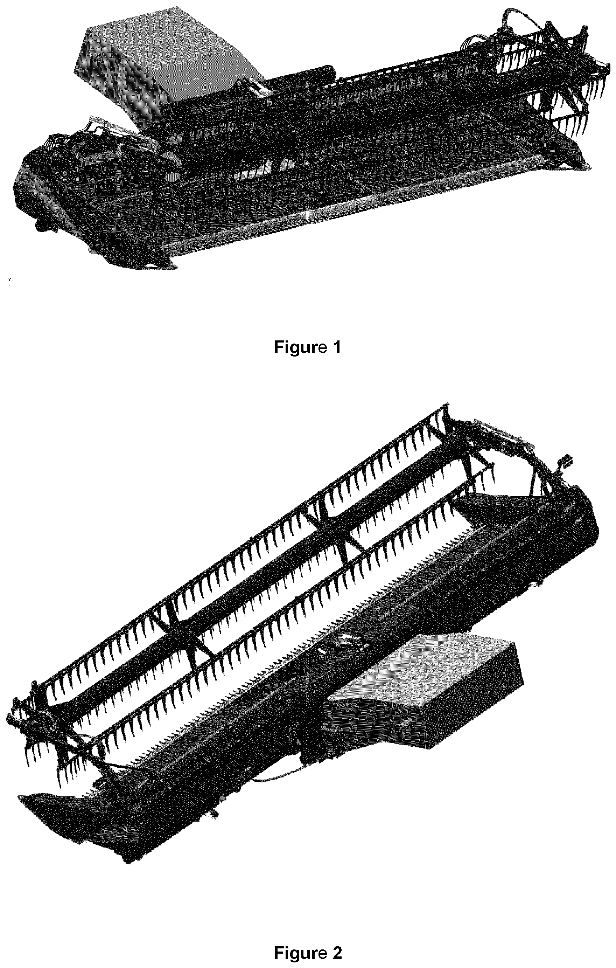

Figure 1 shows a perspective view of an agricultural platform for cutting cereal crops.
Figure 2 shows the rear perspective view of an agricultural platform for cutting cereal crops.

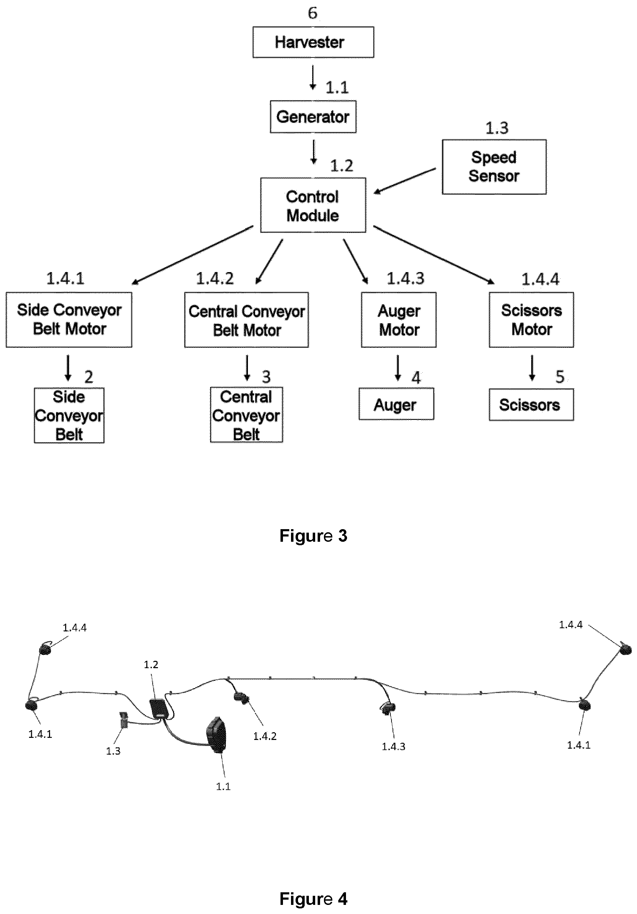

Figure 3 shows the interaction of the system elements, with the platform elements driven and controlled by the system.
Figure 4 shows a representation of a possible positioning of the elements of the system.

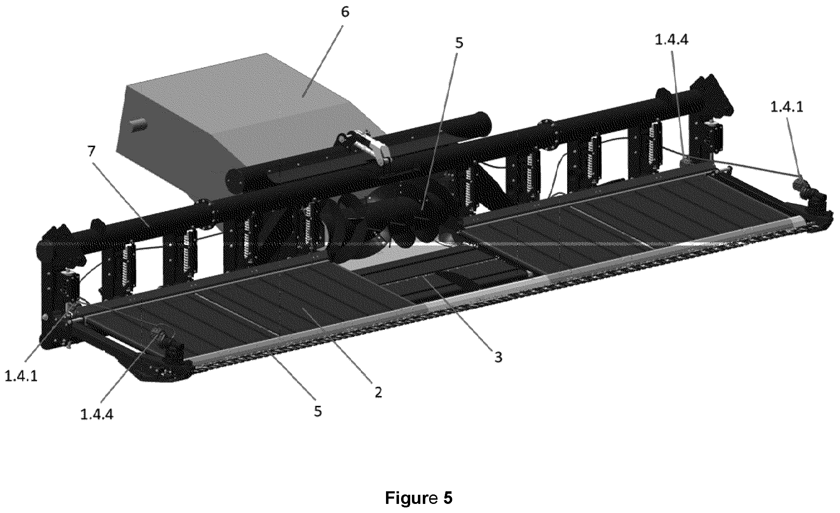

Figure 5 shows the perspective view of an agricultural platform for cutting cereal crops without the fairing elements.

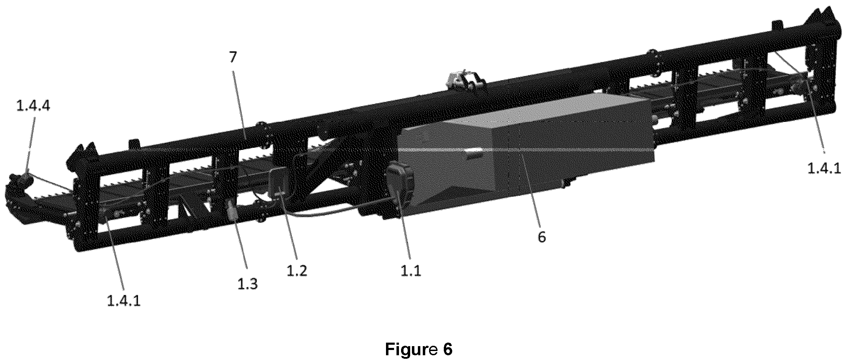

Figure 6 shows the rear perspective view of an agricultural platform for cutting cereal crops without the fairing elements.
Figure 7 shows the rear central part of the agricultural platform for cutting cereal crops without the fairing elements, connected to the combine harvester feed channel.
Figure 8 shows the rear central part of the agricultural platform for cutting cereal crops without the fairing elements.
Figure 9 shows the front central part of the agricultural platform for cutting cereal crops without the fairing elements.
Figure 10 shows the front central part of the agricultural platform for cutting cereal crops without the fairing elements, with the central conveyor belt detailed.
Figure 11 shows one of the ends of the agricultural platform for cutting cereal crops without the fairing elements, with the side conveyor belt and cutting system detailed.

### Detailed description of the invention:

The present invention presents a harvesting machine comprising a combine harvester, an agricultural platform coupled to said combine harvester, and an electric drive and control system for said agricultural platform, the electric drive and control system being configured for driving and controlling mobile elements of the agricultural platform configured for cutting, collecting and transferring the crop to the combine harvester. The present invention replaces the mechanical transmission system of movement commonly used in such platforms, it is preferably applied to platforms for cutting agricultural crops such as corn and cereals, and comprises: a generator(1.1); a control module (1.2); a speed sensor (1.3); and a plurality of electric motors (1.4).

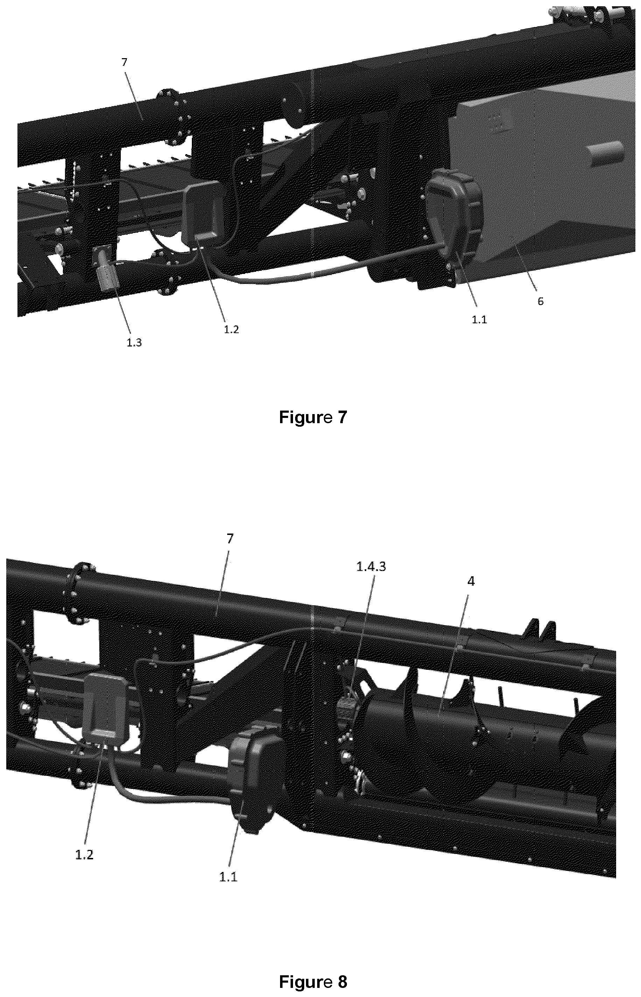

The generator (1.1), as seen in figure 7, has the function of generating the electrical energy that powers the other elements of the system (1), is connected to the transmission shaft of the combine harvester feed channel and, with the rotation of the same, transforms the mechanical energy provided by the transmission shaft into electrical energy and transmits this electrical energy to the control module (1.2).

The control module (1.2), as seen in figure 7, receives information on the platform displacement speed from the speed sensor (1.3), and with this information controls the operating speed of the motors (1.4), in addition to powering electrically the same and being attached to the platform structure and being electrically powered by the generator (1.1).

As the system (1) controls different motors (1.4), which drive different elements of the platform, the control module (1.2) controls each individually, allowing the proper functioning of each of the elements according to their functions.

The speed sensor (1.3), as seen in figure 7, has the function of precisely sensing the platform displacement speed during crop harvesting and providing this information to the control module (1.2) so that it can be possible to adjust the operating speed of the motors (1.4), making the same work according to the movement of the platform. The speed sensor is attached to the platform structure.

The motors (1.4), as seen in figures 8, 9, 10, and 11, have the function of driving the operation of the other mobile elements of the platform responsible for performing the cutting, collection and transfer of the crop to the combine harvester.

Agricultural platforms can have different configurations and arrangements depending on the crop to be harvested, and the cutting systems transferring the harvested crop can be carried out in numerous ways. The system (1) can be implemented on all cutting and harvesting platforms, regardless of the crop to be harvested and the composition of the elements thereof.

To illustrate one of the possibilities of implementing the present invention, there is used as an example a cutting platform addressed to the harvesting of grains comprising a cutting system with scissors, conveyor belts for transferring the crop to the central part of the platform and an auger (helicoid) to collect the crop by moving the same to the combine harvester feed channel. However, the system (1), as mentioned, is not limited to this application.

For this type of platform, the system comprises, preferably, six motors (1.4): two motors for the side conveyor belts (1.4.1); a center conveyor belt motor (1.4.2); an auger motor (1.4.3); and two cutting system motors (1.4.4).

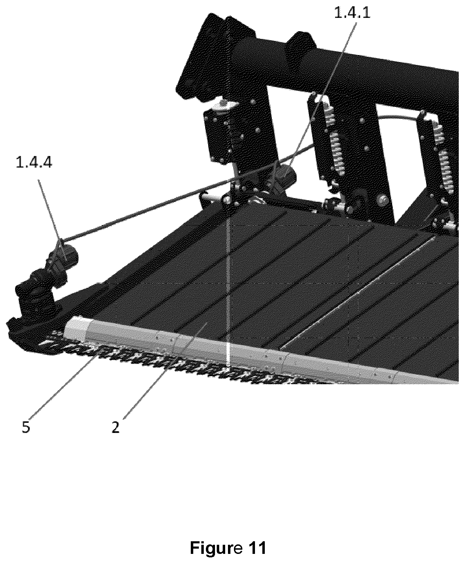

The motors of the side conveyor belts (1.4.1), as seen in figure 11, are installed in the platform structure and drive the operation of the side conveyor belts (2).

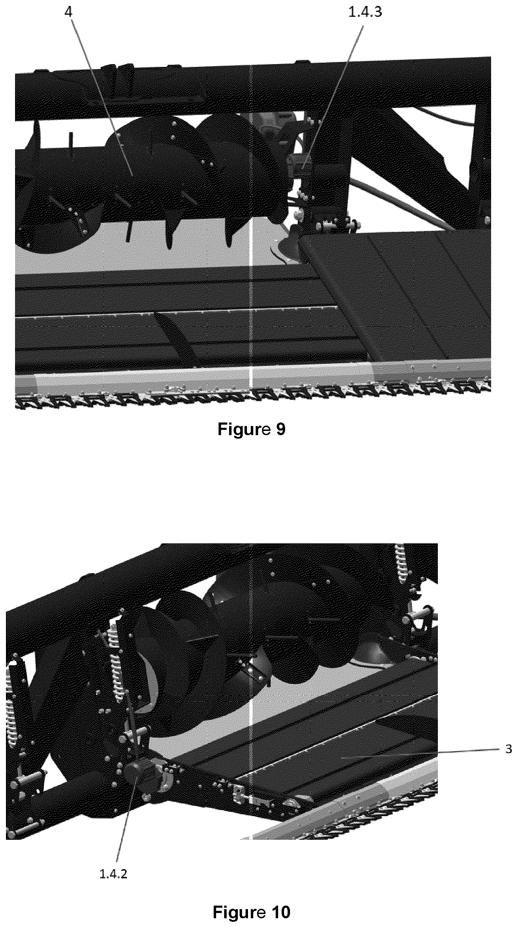

The central conveyor belt motor (1.4.2), as seen in figure 10, is installed in the platform structure and drives the operation of the central conveyor belt (3).

The auger motor (1.4.3), as seen in figure 9, is installed in the platform structure and drives the operation of the auger (4).

The cutting system motors (1.4.4), as shown in figure 11, are installed on the platform structure and drive the operation of the cutting system (5).

Those skilled in the art will value the knowledge presented here and will be able to reproduce the invention in the presented embodiments and in other variants, encompassed by the scope of the appended claims.

## Claims

1. Harvesting machine comprising a combine harvester, an agricultural platform coupled to said combine harvester, and an electric drive and control system for said agricultural platform, the electric drive and control system being configured for driving and controlling mobile elements of the agricultural platform configured for cutting, collecting and transferring the crop to the combine harvester,
wherein the electric drive and control system comprises: a generator (1.1); a control module (1.2); a speed sensor (1.3); and a plurality of electric motors (1.4.1, 1.4.2, 1.4.3, 1.4.4),
wherein the generator (1.1) is mechanically connected to a transmission shaft of a feed channel (6) of the combine harvester for transforming mechanical energy provided by said transmission shaft into electrical energy,
wherein the control module (1.2), attached to a structure of the agricultural platform, is electrically connected to the generator (1.1) for receiving said electrical energy,
wherein the control module (1.2) is electrically connected to the speed sensor (1.3) attached to the structure of the agricultural platform and configured for detecting the displacement speed of the agricultural platform, the control module (1.2) being configured to individually control an operating speed of each motor (1.4.1, 1.4.2, 1.4.3, 1.4.4) depending on said displacement speed, and
wherein the plurality of electric motors (1.4.1, 1.4.2, 1.4.3, 1.4.4), attached to the structure of the agricultural platform, are configured for actuating the mobile elements.

2. Harvesting machine according to claim 1, wherein the agricultural platform comprises side conveyor belts (2) driven by first motors (1.4.1) of the plurality of electric motors (1.4.1, 1.4.2, 1.4.3, 1.4.4).

3. Harvesting machine according to claim 1, wherein the agricultural platform comprises a central conveyor belt (3) driven by a second motor (1.4.2) of the plurality of electric motors (1.4.1, 1.4.2, 1.4.3, 1.4.4).

4. Harvesting machine according to claim 1, wherein the agricultural platform comprises an auger (4) driven by a third motor (1.4.3) of the plurality of electric motors (1.4.1, 1.4.2, 1.4.3, 1.4.4).

5. Harvesting machine according to claim 1, wherein the agricultural platform comprises a cutting system (5) driven by fourth motors (1.4.4) of the plurality of electric motors (1.4.1, 1.4.2, 1.4.3, 1.4.4).

## Patentansprüche

1. Erntemaschine umfassend einen Mähdrescher, eine mit dem Mähdrescher gekoppelte landwirtschaftliche Plattform und ein elektrisches Antriebs- und Steuersystem für die landwirtschaftliche Plattform, wobei das elektrische Antriebs- und Steuersystem dazu konfiguriert ist, mobile Elemente der landwirtschaftlichen Plattform anzutreiben und zu steuern, die zum Schneiden, Sammeln und Übergeben des Ernteguts an den Mähdrescher konfiguriert sind,
wobei das elektrische Antriebs- und Steuersystem Folgendes umfasst: einen Generator (1.1); ein Steuermodul (1.2); einen Geschwindigkeitssensor (1.3); und eine Vielzahl von Elektromotoren (1.4.1, 1.4.2, 1.4.3, 1.4.4),
wobei der Generator (1.1) mechanisch mit einer Transmissionswelle eines Zuführkanals (6) des Mähdreschers verbunden ist, um die von der Transmissionswelle gelieferte mechanische Energie in elektrische Energie umzuwandeln,
wobei das Steuermodul (1.2), das an einer Struktur der landwirtschaftlichen Plattform angebracht ist, elektrisch mit dem Generator (1.1) verbunden ist, um die elektrische Energie zu empfangen;
wobei das Steuermodul (1.2) elektrisch mit dem an der Struktur der landwirtschaftlichen Plattform angebrachten Geschwindigkeitssensor (1.3) verbunden und dazu konfiguriert ist, die Verschiebungsgeschwindigkeit der landwirtschaftlichen Plattform zu erkennen, wobei das Steuermodul (1.2) dazu konfiguriert ist, eine Betriebsgeschwindigkeit jedes Motors (1.4.1, 1.4.2, 1.4.3, 1.4.4) in Abhängigkeit von der Verschiebungsgeschwindigkeit individuell zu steuern, und
wobei die Vielzahl von Elektromotoren (1.4.1, 1.4.2, 1.4.3, 1.4.4), die an der Struktur der landwirtschaftlichen Plattform angebracht sind, für die Betätigung der beweglichen Elemente konfiguriert sind.

2. Erntemaschine nach Anspruch 1, wobei die landwirtschaftliche Plattform seitliche Förderbänder (2) umfasst, die von ersten Motoren (1.4.1) der Vielzahl von Elektromotoren (1.4.1, 1.4.2, 1.4.3, 1.4.4) angetrieben werden.

3. Erntemaschine nach Anspruch 1, wobei die landwirtschaftliche Plattform ein zentrales Förderband (3) umfasst, das von einem zweiten Motor (1.4.2) der Vielzahl von Elektromotoren (1.4.1, 1.4.2, 1.4.3, 1.4.4) angetrieben wird.

4. Erntemaschine nach Anspruch 1, wobei die landwirtschaftliche Plattform eine Schnecke (4) umfasst, die von einem dritten Motor (1.4.3) der Vielzahl von Elektromotoren (1.4.1, 1.4.2, 1.4.3, 1.4.4) angetrieben wird.

5. Erntemaschine nach Anspruch 1, wobei die landwirtschaftliche Plattform ein Schneidsystem (5) umfasst, das von vierten Motoren (1.4.4) der Vielzahl von Elektromotoren (1.4.1, 1.4.2, 1.4.3, 1.4.4) angetrieben wird.

## Revendications

1. Machine de récolte comprenant une moissonneuse-batteuse, une plateforme agricole couplée à ladite moissonneuse-batteuse, et un système électrique d'entraînement et de commande pour ladite plateforme agricole, le système électrique d'entraînement et de commande étant configuré pour entraîner et commander des éléments mobiles de la plateforme agricole configurés pour couper, collecter et transférer la récolte vers la moissonneuse-batteuse,
dans lequel le système électrique d'entraînement et de commande comprend : un générateur (1.1) ; un module de commande (1.2) ; un capteur de vitesse (1.3) ; et une pluralité de moteurs électriques (1.4.1, 1.4.2, 1.4.3, 1.4.4),
dans lequel le générateur (1.1) est mécaniquement connecté à un arbre de transmission d'un canal d'alimentation (6) de la moissonneuse-batteuse pour transformer l'énergie mécanique fournie par ledit arbre de transmission en énergie électrique,
dans lequel le module de commande (1.2), fixé à une structure de la plateforme agricole, est électriquement connecté au générateur (1.1) pour recevoir ladite énergie électrique,
dans lequel le module de commande (1.2) est électriquement connecté au capteur de vitesse (1.3) fixé à la structure de la plateforme agricole et configuré pour détecter la vitesse de déplacement de la plateforme agricole, le module de commande (1.2) étant configuré pour commander individuellement une vitesse de fonctionnement de chaque moteur (1.4.1, 1.4.2, 1.4.3, 1.4.4) en fonction de ladite vitesse de déplacement,
et dans lequel la pluralité de moteurs électriques (1.4.1, 1.4.2, 1.4.3, 1.4.4), fixés à la structure de la plateforme agricole, sont configurés pour actionner les éléments mobiles.

2. Machine de récolte selon la revendication 1, dans laquelle la plateforme agricole comprend des courroies transporteuses latérales (2) entraînées par des premiers moteurs (1.4.1) de la pluralité de moteurs électriques (1.4.1, 1.4.2, 1.4.3, 1.4.4).

3. Machine de récolte selon la revendication 1, dans laquelle la plateforme agricole comprend une courroie transporteuse centrale (3) entraînée par un second moteur (1.4.2) de la pluralité de moteurs électriques (1.4.1, 1.4.2, 1.4.3, 1.4.4).

4. Machine de récolte selon la revendication 1, dans laquelle la plateforme agricole comprend une vis sans fin (4) entraînée par un troisième moteur (1.4.3) de la pluralité de moteurs électriques (1.4.1, 1.4.2, 1.4.3, 1.4.4).

5. Machine de récolte selon la revendication 1, dans laquelle la plateforme agricole comprend un système de coupe (5) entraîné par des quatrièmes moteurs (1.4.4) de la pluralité de moteurs électriques (1.4.1, 1.4.2, 1.4.3, 1.4.4).
